# EUROPEAN PATENT APPLICATION

(11) **EP 3 783 556 A1**
(43) Date of publication of application: **24.02.2021**
(21) Application number: 20177605.1
(22) Date of filing: 29.05.2020
(51) Int. Cl.: G06Q 20/20, G06Q 20/04, G06Q 20/32, G07G 1/14, G07G 5/00

(54) **ELECTRONIC POINT OF SALE DEVICE**

(71) Applicant: B P Digital Ltd, Manchester M11 2NB (GB)
(72) Inventor: BENNET, Oliver, Loughborough, Leicestershire LE11 5RF (GB); PERRY, James, Leicester, Leicestershire LE11 5RF (GB)
(74) Representative: Adamson Jones

(57) **Abstract**

The present invention relates to a method of providing a transaction receipt for an Electronic Point of Sale (EPOS) system comprising sending a receipt print signal comprising receipt data for a transaction receipt from an EPOS system to a printer. The print signal is intercepted by a relay device prior to printing by the printer. A selection of receipt type is received as an input to the relay device and the receipt data is selectively relayed to the printer or a wireless transmission device according to the received receipt type selection.

## Description

The present invention relates to a relay device, particularly to relay device for an electronic point of sale system.

### Introduction

Electronic Point of Sale (EPOS) systems are digital processing systems used in shops, restaurants and other retail outlets to provide a digital way of facilitating customers paying for goods and services. EPOS systems can record sales transactions, update stock levels and provide accurate pricing information. EPOS systems typically provide a customer with a printed receipt.

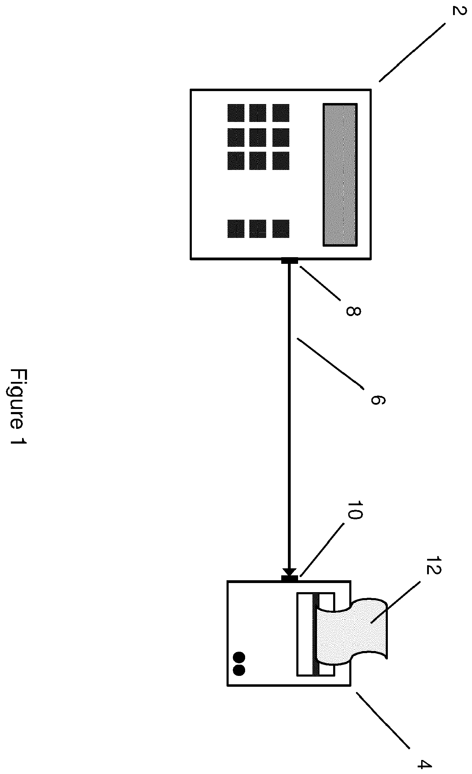

Figure 1 shows an electronic point of sale (EPOS) system 2 connected to a printing system 4, i.e. a conventional local printer connected to the EPOS system 2 via a cable 6. Once a sales transaction has been completed, the EPOS system 2, the system issues a transaction receipt. Receipt data is sent from output 8 provided by the EPOS and sent via wired connection 6 as a print signal to an input/receiver 10 of the printer 4. The printer 4 interprets the print signal and prints the corresponding receipt 12.

However, increasingly, people wish to receive the receipt in an electronic/digital form. EPOS systems that can provide an electronic receipt via email are known, however, they require the customer to provide an email address. It is both time consuming to exchange details and customers may be reluctant to hand over personal details merely for the sake of obtaining a receipt. The email delivery incurs a time delay and a customer may only later realise that an email receipt has not been correctly received, i.e. when a customer is no longer at the point of sale. Undelivered emails, spam filters and the like can prevent the customer ever receiving a receipt.

Furthermore, the customer must collate and organise receipts within an email account environment, thereby requiring the user to generate his/her own system for managing and retrieving receipts.

EPOS systems are also typically very expensive. Therefore, a retailer owning an existing EPOS system may incur significant expense replacing legacy equipment in order to implement new functionality. Legacy EPOS equipment therefore provides a significant immediate barrier to the widespread adoption of electronic receipt solutions.

It is the aim of the present invention to provide electronic receipt delivery whilst reducing the need to replace expensive existing EPOS hardware. It is an alternative and/or second aim of the present invention to provide electronic receipt delivery in a pragmatic manner, e.g. without exchanging contact information of the recipient.

### Statement of Invention

According to a first aspect of the invention, there is provided : a method of providing a transaction receipt for an Electronic Point of Sale (EPOS) system comprising: sending a receipt print signal comprising receipt data for a transaction receipt from an EPOS system to a printer; intercepting the print signal by a relay device prior to printing by the printer; receiving a selection of receipt type as an input to the relay device; and selectively relaying the receipt data to the printer or a wireless transmission device according to the received receipt type selection.

Optionally, selection of receipt type is made via a manual input via the relay device.

Optionally, the user is prompted to make a selection.

Optionally a mobile computing device is configured to operatively connect to the relay via the wireless transmission to receive receipt data therefrom.

Optionally, the relay device extracts transaction receipt data from the print data prior to transmission via the wireless transmission device and/or where the mobile computing device extracts transaction receipt data from the print data after transmission from the wireless transmission device
Optionally, the relay device and/or the mobile computing device extracts predetermined data fields from the print signal and generates a further data signal comprising said data fields.

Optionally, the data fields comprise data fields of the transaction receipt.

Optionally, the mobile computing device is configured to store the receipt data in non-volatile memory.

Optionally, the mobile computing device is configured to send receipt data to the relay device.

Optionally, one or both of the mobile computing device and the relay device are configured to generate a receipt print signal comprising the receipt data from the mobile computing device.

Optionally, the receipt print signal is relayed to the printer to print the transaction receipt from the mobile computing device.

Optionally, the print signal and/or data is held in memory by the relay device for a predetermined period of time.

Optionally, the predetermined period of time is until a further print signal relating to a further transaction receipt is intercepted by the relay device.

Optionally, the relay device extracts transaction receipt data from the print data prior to transmission via the wireless transmission device. The relay device may or may not identify a format of the print data, e.g. a format or structure of the print data file contents. The relay device may or may not identify data separators or other features in the print data, e.g. commas, line breaks or the like. The relay device may extract specific data from one or more predetermined location in the print data, e.g. identified by the data location relative to the one or more data separators/features.

The relay device may identify one from a list of predetermined or known formats
Optionally, the relay device extracts predetermined data fields from the print signal and generates a further data signal comprising said data fields for transmission via the wireless transmission device. Optionally, the relay device collates the data fields within the second output signal
The relay device and/or mobile computing device may extract transaction receipt data from the print data/signal. The transaction receipt data may be provided in a human readable format. The transaction receipt data may be provided in a machine readable format.

The mobile computing device may store the receipt data and/or extracted data (e.g. extracted data fields) in a database. The mobile computing device may transmit the receipt data and/or extracted data to a remote storage device (e.g. cloud-based storage). The transaction receipt data and/or data fields may be stored as data fields in a database on the mobile computing device.

The mobile computing device may transmit receipt data to the relay device. The receipt data may comprise substantially the same receipt data as transmitted to the mobile computing device.

Optionally, one or both of the relay device and the mobile computing device are configured to generate a receipt print signal comprising the receipt data from the mobile computing device (i.e. the print signal is reconstructed using the receipt data). Optionally, the receipt data comprises the extracted data fields (i.e. the print signal is reconstructed using only the extracted data fields).

Optionally, only a select number of fields are transmitted to the relay device and/or are extracted by the relay device.

Optionally, a digital snapshot of the print data is provided. The digital snapshot may comprise an image or PDF.

Optionally, the print signal is sent to remote computing device.

According to a second aspect of the invention, there is provided: a relay device for an Electronic Point of Sale (EPOS) system comprising: a receiver configured to receive a receipt print signal from a EPOS system, the print signal comprising receipt data for a transaction receipt; a first output configured to send a first output signal to a printer; a wireless communication device; a second output configured to send a second output signal to the wireless communication device to wirelessly transmit the second output signal; where the first output signal and the second output signal comprise at least a portion of the receipt data received from the EPOS system; and a controller configured to hold the receipt print signal at least until a user input has been received and in response to said user input to selectively transmit either one of: the first output signal to the first output; the second output signal to the second output; or both the first output signal to the first output and the second output signal to the second output.

The relay device may be in the communication path between the EPOS system and the printing system. The relay device and the printing system may be connected via a cable and/or local area network (LAN).

The destination of the print data may be selected via a manual input.

The wireless transmission device may be a Near Field Communication (NFC) device.

The print data may be held in memory, e.g. volatile memory, by the relay device for a predetermined period of time or until a predetermined event.
The predetermined event or period of time may be until a further print data/signal relating to a further transaction receipt is intercepted by the relay device.

The controller may be configured to selectively transmit for each received print data/signal one of: the first output data to the first output; the second output data to the second output; or both the first output data to the first output and the second output data to the second output.

The print data/signal may comprise transaction receipt data.

The relay device may comprise a manual input to select the destination/output of the print data.

The controller may be configured to prompt the user to make a selection.

The controller may be configured to process the received print signal/data in order to generate the second output. The controller may extract transaction receipt data from the print data/signal. The controller may generate/compile the second output using the extracted transaction receipt data.

The controller is configured to provide transaction receipt data in a human readable format.

The first output may match the received print signal/data, e.g. without processing said data/signal, such that the relay device relays the printing instructions to the printer.

The controller may default to the first output or delete the print data if a predetermined time period elapses and/or if a selection signal is not received, e.g. within a predetermined period or before a further print data/signal is received. Optionally, the controller is configured to hold the print data until any of the following has occurred: a further print signal relating to a further transaction receipt is received by the relay device; a predetermined time period has elapsed since receipt of the print signal; the first output signal has been transmitted; and confirmation of transmission of the second output signal has been confirmed.

The wireless communication device may comprise a Near Field Communication (NFC) device, the NFC device wirelessly transmitting the second output data.

According to a further aspect, there is provided an Electronic Point of Sale (EPOS) arrangement comprising: an Electronic Point of Sale (EPOS) system configured to process/log transactions; a printer connected to the EPOS system for printing transaction receipts upon receiving print signals from the EPOS system; and a relay device according to the second aspect.

The EPOS system, the relay device and the printing system may be connected by a cable and/or a local area network (LAN) connection. The relay device may be connected in a communication path between the EPOS system and printer.

According to a further aspect, there is provided a relay device for an Electronic Point of Sale (EPOS) system comprising: an input configured to receive print data from a EPOS system, the print data relating to printing instructions for a transaction receipt; a first output configured to send a first output data to a printing system; a wireless communication device; a second output configured to send a second output data to the wireless communication device to wirelessly transmit the output data; where the first output data and the second output data comprise at least a portion of the print data received from the EPOS system; and comprising a controller, the controller configured to selectively transmit the first output data to the first output and/or the second output data to the second output
According to a further aspect, there is a method of providing a transaction receipt for an Electronic Point of Sale (EPOS) system comprising sending print data relating to printing instructions for a transaction receipt from an EPOS system to a relay device; receiving the data by the relay device; and selectively relaying at least a portion the print data to either one of: a printing system; a wireless transmission device; or both the printing system and the wireless transmission device.

Any of the optional features disclosed in relation to any one aspect may be applied to any other aspect of the invention wherever practicable.

### Detailed description

**Figure 1** shows a conventional EPOS system and printing system arrangement.
**Figure 2** shows a relay device operatively connected to an EPOS system and a printing system.

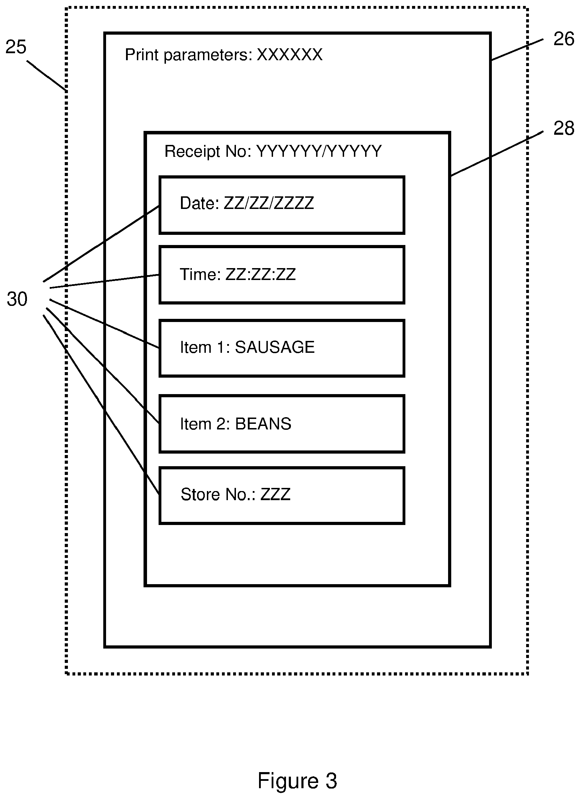

**Figure 3** shows an example data structure of the transaction receipt provided by the EPOS system.

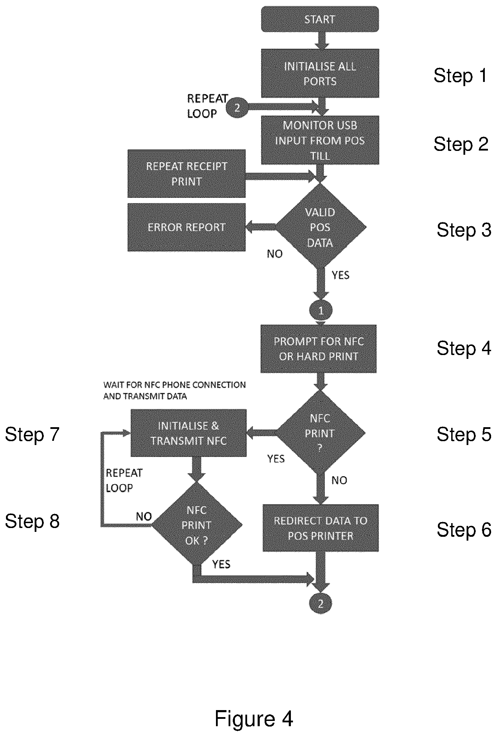

**Figure 4** shows a flowchart relating to the operation of the relay device.
**Figure 5** shows a flowchart relating to a data extraction process.
**Figure 6** shows a flowchart relating to return receipt printing process.

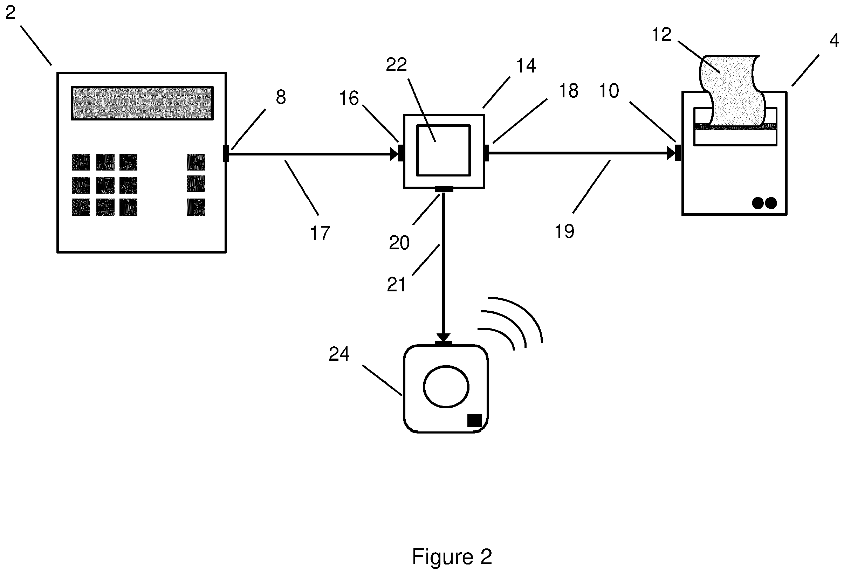

Figure 2 shows a relay device 14 operatively located between an EPOS system 2 and a printer 4. The relay device 14 is configured to intercept data transmitted from the EPOS system 2 to the printer 4.

The EPOS system 2 comprises a conventional EPOS system. The EPOS system 2 provides electronic processing and recording of a sales transaction, e.g. in a retail environment. The EPOS system 2 may comprise a till. The EPOS system may be configured to scan/identify goods being sold in a conventional manner so as to be able to record a transaction. Further details of the EPOS system itself will be omitted since such systems, and conventional features thereof, are well known to the skilled person.

The EPOS system 2 is configured to generate a transaction receipt. In a conventional arrangement as shown in Figure 1, the EPOS system 2 sends a print signal directly to the printer 4. However, in the arrangement of Figure 2, the relay device 14 is connected in the communication path between the EPOS system 2 and printer 4. In various aspects of the invention, neither the EPOS system 2, nor the printer 4 needs to be reprogrammed to accommodate the relay device 14. As such, the EPOS system sends out a conventional print signal but, instead of arriving directly at the printer, it first is caught by the relay device 14.

The EPOS system 2 is configured to generate transaction receipt data 28 comprising one or more fields 30 of the transaction receipt. For example, the fields may comprise, inter alia, any, any combination or all of: itemised transactions (i.e. a list of each purchase); a total transaction amount; a discount applied; a payment method; a store ID; an EPOS ID; cashier ID; an address of a store; a time stamp; and a date stamp. The transaction receipt data 28 may be stored in the American Standard Code for Information Interchange (ASCii) format.

The EPOS is further configured to provide print data 26 relating to printing instructions and/or printing parameters of the transaction receipt. The printing instructions/parameters may include data for specifying, inter alia: a print size area; a text font; a text size; a text orientation; a text positioning; a text underline; a text justification; or a paper feed rate. The print data 26 may be provided in Page Description Language (PDL), for example, the ESC/POS (Epson Standard Code POS) protocol. The print data 26 may incorporate the transaction receipt data 28.

The combined data comprising the print data 26 and the transaction receipt data 28 is sent to an output/transmitter 8 of the EPOS system 2 and sent as a print signal 25 to the printer 4 via the relay device 14. Whilst the combined data is referred to as a single signal 25 it could comprise one or more print signals.

The printer 4 comprises a conventional printing system. The printing system may comprise, inter alia: a thermal printer; an inkjet printer; a LaserJet printer; or a dot matrix printer. The printing system 4 is configured to receive printing instructions via input/receiver 10.

The printer 4 is configured to receive the conventional print signal comprising print data 26. The printer 4 may configured to receive the print data 26 in Page Description Language (PDL), for example, the ESC/POS (Epson Standard Code POS) protocol. The printer 4 is configured to interpret the print data 26 and print a receipt corresponding to the print data 26.

The relay device 14 is configured to receive/intercept the print signal 25 from the EPOS system 2 via an input/receiver 16. The input 16 comprises an interface for a data connection 17 between the relay device 14 and the output 8 of the EPOS system 2. The interface may comprise an interface for a wired connection and/or a wireless connection. The wired connection may comprise, inter alia: a USB connection; a RS232 (Serial) connection; or an ethernet connection. A wireless connection may comprise, inter alia: a Wifi connection; a cellular connection (GSM, 2G, 3G, 4G, 5G, etc.); or a Bluetooth connection.

The connection 17 between the relay device 14 and the EPOS system 2 is disconnectable. For example, the relay device 14 may be unplugged from the EPOS system 2.

The relay device 14 is configured selectively to send a first output data to a printing system 4 via a first output/transmitter 18. The first output 18 comprises an interface for a data connection 19 between the relay device 14 and an input 10 of the printing system 4. The interface may comprise an interface for a wired connection and/or a wireless connection. The wired connection may comprise, inter alia: a USB connection; a RS232 (Serial) connection; or an ethernet connection. The wireless connection may comprise, inter alia: a Wifi connection; a cellular connection (GSM, 2G, 3G, 4G, 5G, etc.); or a Bluetooth connection. The first output 18 may correspond to (i.e. match or mimic) the output 8 of the EPOS system 2.

The connection 19 between the relay device 14 and the printing system 4 is disconnectable. For example, the relay device 14 may be unplugged from the printing system 2.

The first output data provided by the first output 18 comprises the print data 26 relating to the printing instructions of the transaction receipt. The first output data comprises the transaction receipt data 28. The first output data comprises substantially the same data as the data 25 received by the input 16. Thus the first output mimics or matches the received print signal, wherein the device 14 acts selectively as a simple relay or signal repeater device if a printed/paper receipt is required.

The relay device 14 is configured selectively to send a second output data to wireless communication device 24 via a second transmitter/output 20. The second output 20 comprises an interface for a for a data connection between the relay device 14 and the wireless communication device 24. The interface may comprise an interface for a wired connection and/or a wireless connection. The wired connection may comprise, inter alia: a USB connection; a RS232 (Serial) connection; or an ethernet connection. The wireless connection may comprise, inter alia: a Wifi connection; a cellular connection (GSM, 2G, 3G, 4G, 5G, etc.); or a Bluetooth connection.

The connection 21 between the relay device 14 and the wireless communication device 24 is disconnectable. For example, the relay device 14 may be unplugged from wireless communication device 24.

The wireless communication device 24 comprises a transmitter or transceiver.

The second output data/signal provided by the second output 20 comprises transaction receipt data 28 and is configured to be sent to the wireless communication device 24 for wireless transmission. The second output data may comprise American Standard Code for Information Interchange (ASCii) data. The second out data may comprise data comprising the Portable Document Format (PDF). Oher suitable, widely-adopted formats/standards could be used.

A simple cable connection is considered suitable for many uses, e.g. where an existing printer shares a simple cable connection with one or more EPOS system. The EPOS system 2, the printing system 4 and the relay device 14 may be connected via a local area network (LAN).

The relay device 14 comprises a controller 22. The controller 22 is configured to receive data from the input 16, process the data and send the data to the first output 18 and/or the second output 20. The controller 22 comprises a data processer. The data processer comprises hardware (for example, a CPU, RAM, ROM etc.) and/or software (for example, an Operating System) required for processing the data.

The controller 22 is configured to extract the transaction receipt data 28 from the data 25. One or more data fields 30 from transaction receipt data may be extracted from the input data by the controller 22.

The controller 22 is configured to store the data 25. The controller 22 may only store the data 25 for a predetermined period of time or until a predetermined event occurs, e.g. from a list of possible predetermined events. The data 25 may only be stored until new data relating to a further transaction receipt is received by the controller.

The relay device 14 comprises a switching arrangement. The switching arrangement is operatively connected to the controller such that user can select whether the data 25 is sent to the first output 18 to be printed, the second output 20 to be wirelessly transmitted, or both the first and second output to be printed and wirelessly transmitted.

The switching arrangement may comprise a user interface (e.g. one or more manual switch) to allow the user to select the desired output. The user interface may comprise a plurality of buttons, for example, a first button to send the data to the first output 18 and a second button to send the data to the second output. A further button may or may not be provided to send data to both the first and the second output. A further button may or may not be provided to wipe the current data held in the device memory.

Alternatively, the switching/selection arrangement comprises non-physical user interface (i.e. controlled by software etc.) to allow the user to select the desired output. The user interface may be provided at a remote location. For example, the non-physical switch may comprise a remote app installed on a mobile device operated by a sales assistant.

The relay device 14 comprises a wireless communication device 24 to provide wireless communication between the relay device 14 and a user device. The user device comprises a mobile computing device, for example, a mobile (cellular) phone, a tablet computer, or a laptop computer. The wireless communication device 24 is in communication with the second output 18 of the relay device 14 to receive data therefrom, i.e. via the wireless communication device 24.

The wireless communication device 24 preferably communicates with the user device using a short range wireless communication method. The short range wireless communication method comprises Near Field Communication (NFC) protocol. In other embodiments, the short range wireless communication method comprises Bluetooth protocol and/or Wifi protocol. However it is possible in other examples, that the wireless communication with the user device could be via longer range signals, e.g. any conventional mobile/cellular phone signals.

The wireless communication device 24 may be formed integrally with the relay device 14 (i.e. the wireless communication device 24 and the relay device 14 share a common housing).

Alternatively, the wireless communication device 24 is formed separately, from the relay device (i.e. the wireless communication device 24 and the relay device 14 comprise separate housings). The wireless communication device 24 comprises an interface for a for a data connection 21 between the relay device 14 and the wireless communication device 24. The interface may comprise an interface for a wired connection and/or a wireless connection. The wired connection may comprise, inter alia: a USB connection; a RS232 (Serial) connection; or an ethernet connection. The wireless connection may comprise, inter alia: a Wifi connection; a cellular connection (GSM, 2G, 3G, 4G, 5G, etc.); or a Bluetooth connection.

The relay device 14 may be provided as a standalone device (i.e. the relay device 14 does not form part of, or is not integral with, the EPOS system or the printing system).

In some embodiments, the relay device 14 is integral with the EPOS system 2.

In some embodiments, the relay device 14, e.g. including the wireless communications device is integral with the printing system 4, e.g. provided within a common housing with the printer hardware and/or as a module thereof.

### Operation of invention

The relay device 14 is operatively connected to the EPOS system 2. For example, this comprises connecting a USB cable between the relay device 14 and the EPOS system 2.

The relay device 14 is operatively connected to the printing system 4. For example, this comprising connecting a USB cable between the relay device 14 and the printing system 4.

In step 1, the relay device 14 initialises the input 16 to check the connection between the relay device 14 and the EPOS system. The relay device initialises the first output 18 to check the connection between the relay device 14 and the printing system 4. The relay device 14 may initialise the second output 20 to check the connection between the relay device 14 and the wireless communication device 24.

In step 2, the relay device 14 monitors the input 16 to check for data 25 from the EPOS system 2.

A sales transaction is processed by the EPOS system 2. The EPOS generates a receipt and generates transaction receipt data 28 corresponding to the receipt. The transaction receipt data 28 is provided with print data 26 to provide instructions for printing a receipt. The data 25 comprising the print data 26 and transaction receipt data 28 is sent to an output 8 provided by the EPOS system 2.

The data 25 is received by the relay device 14 at input 16 via the connection 17.

In step 3, the relay device 14 performs a validation check on the data 25. If the data 25 passes the validation check, a prompt is sent to the cashier or customer, e.g. via the user interface. If the data 25 does not pass the validation check, an error report is generated.

In step 4, the prompt prompts the user to the choose the output location. The prompt may comprise an auditory and/or visual signal. The prompt may comprise a message to the cashier or customer.

In step 5, the cashier/customer chooses the output location, depending on whether the customer wishes to receive a digital receipt or a printed receipt. Options could be provided to receive both forms of receipt or no receipt at all.

As shown in step 6, if the customer wishes to receive a printed receipt 12, the cashier or customer chooses to print the transaction receipt, by selecting the appropriate option on the relay device 14. For example, the cashier or customer pushes the button on the relay device 14 that provides a printed receipt. The button sends a signal to the controller to send the relevant print data received by the input 16 to the first output 18. The print signal 25 is sent to the printing system 4 via the data connection 19 and the transaction receipt is printed.

In the case printing is selected, the output data remains substantially unchanged from the data signal 25 received by the input 16. Therefore, the printing instructions from EPOS system 2 are passed onto the printing system 4 and the relay device 14 merely acts as a relay or signal repeater between the EPOS system 2 and the printing system 4. The printed receipt 12 remains substantially unchanged from a receipt printed by the conventional arrangement shown in Figure 1. Once the print signal is output by the relay device, the associated data is need no longer held by the relay device and can be wiped or held until replaced by a further print signal from the EPOS system.

As shown in step 7, if the customer wishes to receive a digital receipt, the cashier chooses to wirelessly send the receipt by selecting the appropriate option on the relay device 14. For example, the cashier pushes the button on the relay device 14 that wirelessly sends a digital receipt. The button sends a signal to the controller to send the input data to the second output 20.

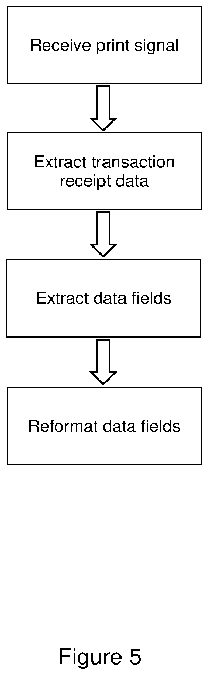

The controller 22 processes the print signal 25 to extract the transaction receipt data 28. This process is shown in greater detail in figure 5. The controller may identify and extract one or more fields 30 from the transaction receipt data 28. For example, the extracted fields may comprise, one or more of: itemised transactions (i.e. the product and/or price thereof); a total transaction amount; a discount applied; a payment method; a store ID; an EPOS ID; cashier ID; an address of a store; a time stamp; and a date stamp.

Typically, the extracted fields will be predetermined by the controller 22. Additionally or alternatively, the operator may be able to program the extracted fields into the controller 22, and/or may be able to select the fields on an on-demand basis.

In this regard, there are a limited number of widely adopted formats for receipt printing and the controller 22 may identify the relevant data format/structure and extract data pertaining to the fields of interest for generating the e-receipt from the relevant location within the format/structure of the received print signal data. For example, the controller 22 may be configured to identify the ASCii characters for each field or by the way in which the fields are parametrised within the data structure. The controller can then identify and extract specific portions of the data that are required to populate an electronic receipt by the location of the data relative to certain characters (e.g. punctuation marks or control characters) or other data location features such as line/row numbers. In this way the controller 22 can be programmed to extract data fields pertaining to the same transaction data type from print signal data of different EPOS systems.

The controller may identify the relevant data structure, e.g. by comparing the received data structure with a list of predetermined/known data structures. Additionally or alternatively the controller may be pre-programmed to work with a specific known print data structure of the connected EPOS system. The controller can then extract a predetermined list of data content from the print signal data.

The receipt data 28 and/or one or more extracted fields 30 may then be inserted into a pre-existing template, i.e. a different format to the printed receipt data. This is so that the important fields in the transaction receipt data 28 can be logged in a common format for the user, regardless of what EPOS system has been used for the transaction and/or can be presented in a more aesthetically pleasing or standardised manner to the user. In this regard the processing of the data to generate the e-receipt is different from the simple relaying/repeating of the print signal to the printer.

The pre-existing template may comprise additional information (i.e. more than is available on a printed receipt) for example, it may comprise promotional material or information on a returns policy. The additional material may comprise images, moving images, hyperlinks, coloured text, shapes etc, which are typically not provided for in standard EPOS printing protocols.

The controller 22 then processes the transaction receipt data 28 or the print data 26 so that it can be sent in a digital form that can be received by the customer's mobile computing this device. The wireless communication device 24 is initialised and establishes a connection with the customer's mobile computing device. The data is then transmitted to the customer's mobile computing device using wireless transmission. This may be performed using the NFC protocol. The customer may then view the digital receipt on their mobile computing device.

In an embodiment, this may comprise inserting the transaction receipt data into a human readable format, for example, a Portable Document Format (PDF) file. It can be appreciated that this is merely exemplary, and any suitable human readable format may be used. The human readable document may comprise one or more of extracted data fields 30.

Additionally or alternatively, the controller 22 processes the data 25 to provide a 'digital snapshot' of the data 25. This may create a digital receipt of substantially the same form (i.e. the same content and layout etc.) as the printed receipt but provided in a digital format. For example, the receipt may be provided as a raster image (e.g. JPEG, PNG etc.) or a PDF file.

In futher embodiments, the controller 22 may generate and transmit the transaction receipt data 28/print data 26/extracted fields 30 in a machine-readable format. The data is then interpreted by software provided on the customers mobile computing device. For example, an app on the customer's mobile computing device interprets the machine readable data and displays the information on the customer's device.

The controller 22 may extract any relevant fields before sending the data to the customers device as previously described. Alternatively, the controller 22 may merely transmit the raw print data 26 to the customer device, and the software on the device extracts the relevant and/or processes the data into a human readable format. Thus processing may be performed one or both of the relay device 4 or the mobile device.

An independent time stamp may be applied by the controller 22 or customer device, e.g. in addition to any data extracted from the print signal.

The user's device may store the receipts for later retrieval. The receipts may be stored locally on the device. Additionally or alternatively, the receipts may be stored remotely (e.g. on a cloud server). The remote storage device may be linked to/managed by the retailer or another service provider, for example, the remote storage device may comprise a user account for the specific retailer or a plurality of retailers. The retailer may optionally be provided access to the receipts and/or data thereof.

The extracted fields 30 and/or other receipt data may be stored as fields in a database on the user device or remote storage device. This may allow convenient searching/sorting of the relevant fields 30 across one or many different receipts. Additionally, this may allow the user to track spending, or return a specific item without the need to look for a specific receipt. During the extraction process by the relay device 4 or the mobile device, each field 30 may be given an identifier or the like, so that each field 30 in the receipt data 28 is assigned to the appropriate field in the database.

At step 8, a validation step checks that wireless transmission of the transaction receipt has been completed successfully. If the transmission is not successful, then step 7 is repeated until transmission is successful.

At step 5, the cashier/customer may choose to output the data to printing system 4 and the wireless communication device 24 to provide the user with a digital receipt and a printed receipt. In such an event, controller 22 outputs data to both the first output 18 and the second output 20 to provide a digital receipt and a physical receipt. The process is substantially the same as the processes to provide the digital receipt and printed receipt individually, however, the individual processes are performed simultaneously (i.e. step 6 is performed simultaneously to steps 7 and 8).

If receipt delivery is successful via the printing system 4 and/or the wireless communication device 24, then step 2 is repeated and the device monitors the input 16 to check for data from the EPOS system 2.

Data relating to the transaction is held by the controller 22 only temporarily and is erased/replaced when a new input data is received by the controller. Thus, the controller only hold data in a volatile memory for a single transaction at a time. If a new input data is not provided within a predetermined time, the current data stored by the controller may be erased. This maintains 'data hygiene' within the relay device 14 and allows the device to be used with a different EPOS system and/or printing system without the risk of data leakage.

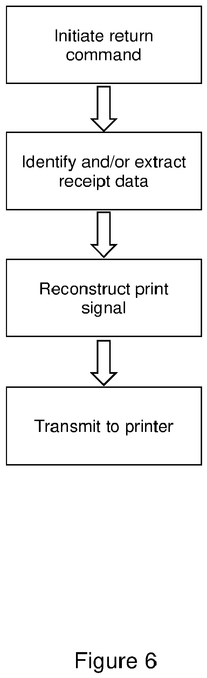

With reference to figure 6, in some embodiments, the customer device is configured to transmit receipt data back to the relay device 14. This may allow the user to send the receipt or receipt data 28 to the relay device 14, which may then send the data to the printer 4 to provide a printed receipt. This may be useful where either the customer and/or the retailer wishes to obtain a printed receipt after the initial transaction has been completed (e.g. when returning an item).

The user device and/or the controller 22 are configured to identify and extract the relevant data fields to reconstruct the print signal 25. For example, if the user initiates a return command on the user device, the device software will identify the relevant fields 30 which are required to reconstruct the receipt data 28 (for example, marketing information etc, may be stripped from the data). The user device will combine the receipt data 28 with print data 26 to generate a print signal 25. The user device thus reconstructs the original print signal 25. The print signal 25 may then be transmitted to the printer 6 for printing via the relay device 4.

However, it can be appreciated the identification/extraction step and/or the reconstruction step may be performed be performed on the controller 22. The user device may therefore send the complete or partial receipt data 28 to the relay device 4 and the processing is performed by the controller 22. For example, this may be performed, where only a digital snapshot of the receipt is sent to the user device.

The receipt return sequence may be initiated by the user via the user device. Additionally or alternatively, the relay device 4 may send a signal to the user device to initiate the sequence.

In some embodiments, the user and/or retailer may be able to selectively send/request a limited number of data fields 30 from the receipt (as opposed to reconstructing the complete original receipt). For example, if the customer is returning a specific item, only the field 30 relating to that item may be needed. This allows printing of a receipt which contains only relevant fields.

As well as printing the receipt at a later date/time, the return transmission of data from the user device to the relay device may additionally or alternatively allow the user to send the receipt or receipt data back to the POS so it can be displayed on the POS display screen or otherwise verified by an operator or the POS controller.

The relay device allows the customer to choose to receive one or both of a digital receipt or a printed receipt at the point of purchase. In various examples of the system, the user may be prompted to make a selection of receipt type, e.g. via a user interface which may or may not be comprised with the relay device.

The relay device acts as a 'ghost' between the EPOS system and the printing system. The EPOS system 'sees' the relay device as a printing system and therefore sends print instructions as if it were directly connected to a printing system. The printing system 'sees' relay device an as an EPOS device and therefore receives print instructions as if it were directly connected to an EPOS system.

Therefore, the relay device can be retrofit to a conventional EPOS system and printing system without the need to replace or modify expensive existing hardware/software.

The relay device is also capable of interpreting standard printing protocols (for example ECS/POS) and so can be used with a wide variety of EPOS systems provided by different manufactures etc., without the need to modify or change the EPOS system.

The wireless transmission of the receipt data does not require the transfer of any personal data between the customer the retailer. For example, the NFC protocol allows substantially unidirectional transmission of data to the customer in an anonymous manner. The cashier is not required to type in an email address and so may attend to other customers whilst the customer receives their receipt.

The receipt data may be held on the user's portable communication device (i.e. mobile/smart phone) such that the user can keep a personal electronic log of transactions/purchases. Software running on the user's device may allow the user to retrieve and/or manage receipts. A central database can be maintained for multiple users, whereby all receipts are stored or backed-up centrally so that the user can access his/her receipt history remotely using a personal login or ID.

## Claims

1. A method of providing a transaction receipt for an Electronic Point of Sale (EPOS) system comprising:
sending a receipt print signal comprising receipt data for a transaction receipt from an EPOS system to a printer;
intercepting the print signal by a relay device prior to printing by the printer;
receiving a selection of receipt type as an input to the relay device; and
selectively relaying the receipt data to the printer or a wireless transmission device according to the received receipt type selection.

2. A method according to any preceding claim, where the selection of receipt type is made via a manual input via the relay device.

3. A method according to claim 2, where the user is prompted to make a selection.

4. A method according to any preceding claim, where a mobile computing device is configured to operatively connect to the relay via the wireless transmission to receive receipt data therefrom.

5. A method according to any preceding claim, where the relay device extracts transaction receipt data from the print data prior to transmission via the wireless transmission device and/or where the mobile computing device extracts transaction receipt data from the print data after transmission from the wireless transmission device

6. A method according to claim 5, wherein the relay device and/or the mobile computing device extracts predetermined data fields from the print signal and generates a further data signal comprising said data fields.

7. A method according to claim 6, wherein the data fields comprise data fields of the transaction receipt.

8. A method according to any of claims 4-7, where the mobile computing device is configured to store the receipt data in non-volatile memory.

9. A method according to any of claims 4-8, where the mobile computing device is configured to send receipt data to the relay device.

10. A method according to claim 9, where one or both of the mobile computing device and the relay device are configured to generate a receipt print signal comprising the receipt data from the mobile computing device.

11. A method according to claim 10, where the receipt print signal is relayed to the printer to print the transaction receipt from the mobile computing device.

12. A method according to any preceding claim, where the print signal and/or data is held in memory by the relay device for a predetermined period of time.

13. A method according to claim 12, where the predetermined period of time is until a further print signal relating to a further transaction receipt is intercepted by the relay device.

14. A relay device for an Electronic Point of Sale (EPOS) system comprising:
a receiver configured to receive a receipt print signal from a EPOS system, the print signal comprising receipt data for a transaction receipt;
a first output configured to send a first output signal to a printer;
a wireless communication device;
a second output configured to send a second output signal to the wireless communication device to wirelessly transmit the second output signal;
where the first output signal and the second output signal comprise at least a portion of the receipt data received from the EPOS system; and
a controller configured to hold the receipt print signal at least until a user input has been received and in response to said user input to selectively transmit either one of: the first output signal to the first output; the second output signal to the second output; or both the first output signal to the first output and the second output signal to the second output.

15. An Electronic Point of Sale (EPOS) arrangement comprising:
an Electronic Point of Sale (EPOS) system;
a printer; and
the relay device according to any of claims 10-14.
